# DEMANDE DE BREVET EUROPEEN

(11) **EP 2 196 941 A1**
(43) Date de publication de la demande: **16.06.2010**
(21) Numéro de dépôt: 08305919.6
(22) Date de dépôt: 11.12.2008
(51) Int. Cl.: G06K 7/00

(54) **Dispositif de connexion à une carte à puce**

(71) Demandeur: Gemalto SA, 92190 Meudon (FR)
(72) Inventeur: Moutel, François, 13600 La Ciotat (FR); Karlisch, Thierry, 13600 La Ciotat (FR); Collet, Pierre-André, 38100 Grenoble (FR); Garnier, Rémi, 13390 Auriol (FR)

(57) **Abrégé**

L'invention propose un dispositif de connexion à une carte (1) à puce, ledit dispositif comprenant, un premier moyen d'appui (3) de carte (12) et un deuxième moyen d'appui 4 opposé destinés respectivement à appuyer contre les surfaces principales (12a, 12b) de la carte quand elle est en position fonctionnelle de connexion, lesdits moyens d'appui ayant une première position serrée Ps et une position déployée Pd;

Il se distingue en ce que les moyens d'appui sont serrés à plats et parallèles l'un de l'autre dans leur position serrée.

## Description

La présente invention concerne un dispositif de connexion à une carte à puce, notamment un lecteur de carte à puce.

Dans le cadre de l'invention, le terme "carte" doit être compris dans son sens le plus général : carte à piste magnétique, carte à mémoire, carte à "puce", etc. Il doit être aussi entendu que le terme "lecteur de carte" est générique: il concerne tout appareil pouvant connecter, lire et/ou écrire des/ou sur des cartes des types précités.

De même, les applications de ces cartes sont très diverses: applications bancaires ou similaires, porte-monnaie électronique, badge de sécurité, etc.

Ces appareils définissent une position fonctionnelle de la carte notamment une fente ou fenêtre d'introduction dans laquelle est insérée la carte en vue d'une opération d'écriture et/ou de lecture. Cette fente est ouverte sur le milieu extérieur et elle est suffisamment large pour laisser pénétrer, à l'intérieur du boîtier du lecteur de carte, de petits objets ou tout simplement des particules ou de la poussière.

Il existe sur le marché des lecteurs de carte à puce qui ont sensiblement les mêmes surfaces qu'une carte à puce mais avec une épaisseur importante (de 9 à 13 mm) et une fente spécifique pour l'insertion de la carte.

Il existe aussi des lecteurs de carte du type PCMCIA qui ne comprennent pas de rabat au-dessus de la carte lorsqu'elle est en position fonctionnelle. Ces lecteurs sont en fait des adaptateurs à insérer dans des fentes d'ordinateur dont la hauteur de fente correspond à l'épaisseur cumulée de la carte et du lecteur pour permettre un appui de la fente ou partie de l'ordinateur sur la carte et assurer un bon contact avec un connecteur placé sur une face principale externe du lecteur.

Il existe aussi de tels adaptateurs avec un rabat ou volet flexible qui est fixé dans une zone proche d'un connecteur PCMCIA à l'ordinateur tout en créant une surépaisseur par rapport à l'épaisseur du connecteur métallique et au boitier métallique de l'adaptateur.

L'ergonomie générale de ces appareils n'est pas toujours optimisée. En particulier, les lecteurs de carte du type susceptible d'être mis dans la poche d'un vêtement doivent être le plus mince possible et se présentent sensiblement sous la forme d'un parallélépipède rectangle. Du fait de l'architecture et de la dimension des composants, le lecteur de carte n'est pas vraiment portable et fin. En particulier, ils ne peuvent pas être mis facilement dans un portefeuille.

Le problème à résoudre est donc de concevoir un lecteur aussi fin que possible et/ou de dimensions (largeur x longueur) sensiblement égales voire inférieures à celles d'une carte à puce.

A cet effet, l'invention a pour objet un dispositif de connexion à une carte (1) à puce, ledit dispositif comprenant, un premier moyen d'appui (3) de carte (12) et un deuxième moyen d'appui 4 opposé destinés respectivement à appuyer contre les surfaces principales (12a, 12b) de la carte quand elle est en position fonctionnelle de connexion, lesdits moyens d'appui ayant une première position serrée Ps et une position déployée Pd;

Il se distingue en ce que les moyens d'appui sont serrés à plats et parallèles l'un de l'autre dans leur position serrée.

Ainsi, sans la carte à l'intérieur, le dispositif est plus compact; et en position déployée le dispositif offre un espace de réception d'une carte au moins entre lesdits moyens d'appui.

La carte peut aussi avoir des épaisseurs variables, par exemple non standardisées.

Le lecteur de carte selon l'invention, est principalement destiné à être logé dans un portefeuille; il comprend de préférence un rabat ou volet ou équivalent au dessus de la carte pour appuyer sur la carte et assurer une bonne connexion et/ou maintenir la carte en place et/ou pour protéger le connecteur du lecteur lorsque la carte n'est pas présente.

Il peut comprendre aussi de préférence des touches d'un clavier et/ou un organe d'affichage. Enfin, le lecteur peut aussi avoir uniquement ou en plus, par rapport aux éléments précités, un second connecteur ou interface de communication externe pour permettre une interaction avec un autre appareil ou terminal.

Dans une variante préférée de l'invention, le lecteur de carte réalise avec la carte une fonction de générateur de numéro à usage unique OTP ("one time pass word" en terminologie anglaise). Par exemple, pour obtenir un OTP qui servira par la suite à une authentification ou moyens de certification d'une transaction, l'utilisateur tape un code PIN sur le clavier du lecteur qui est transmis à la carte; celle-ci en retour génère un OTP si le code est correct et le communique à l'utilisateur notamment en l'affichant sur un écran éventuel du lecteur ou de la carte. Le lecteur peut servir aussi de moyen d'interface homme / machine avec la carte et peut comporter de préférence une source d'énergie et des moyens pour alimenter la carte.

L'invention ainsi que d'autres caractéristiques et avantages sont maintenant exposés dans la description ci-après à travers des exemples de réalisation en référence aux figures annexées, parmi lesquelles:
- la figure 1 illustre une vue en coupe longitudinale du dispositif de l'invention conforme à un premier mode de réalisation et présentant une configuration dite serrée où les moyens d'appui sont rapprochés, la carte étant retirée de sa position fonctionnelle et absente du dispositif ;
- la figure 2 illustre le dispositif de l'invention de la figure précédente, présentant une position dite déployée, la carte étant en position fonctionnelle dans le dispositif;
- les figures 3 et 4 illustrent respectivement une portion agrandie des moyens d'appui des figures précédentes;
- la figure 5 illustre une vue en coupe longitudinale du dispositif de l'invention conforme à un second mode de réalisation et présentant une position serrée, la carte étant retirée de sa position fonctionnelle et absente du dispositif ;
- la figure 6 illustre le dispositif de l'invention de la figure précédente, présentant une configuration dite déployée, la carte étant en position fonctionnelle dans le dispositif.
- les figures 7, 8 illustrent une vue en coupe longitudinale du dispositif de l'invention conforme à un troisième mode de réalisation avec une charnière large ou double présentant respectivement une configuration serrée et déployée;
- les figures 9, 10 illustrent une vue en coupe longitudinale du dispositif de l'invention conforme à un quatrième mode de réalisation avec une charnière souple et élastique, montrant respectivement une configuration serrée et déployée.

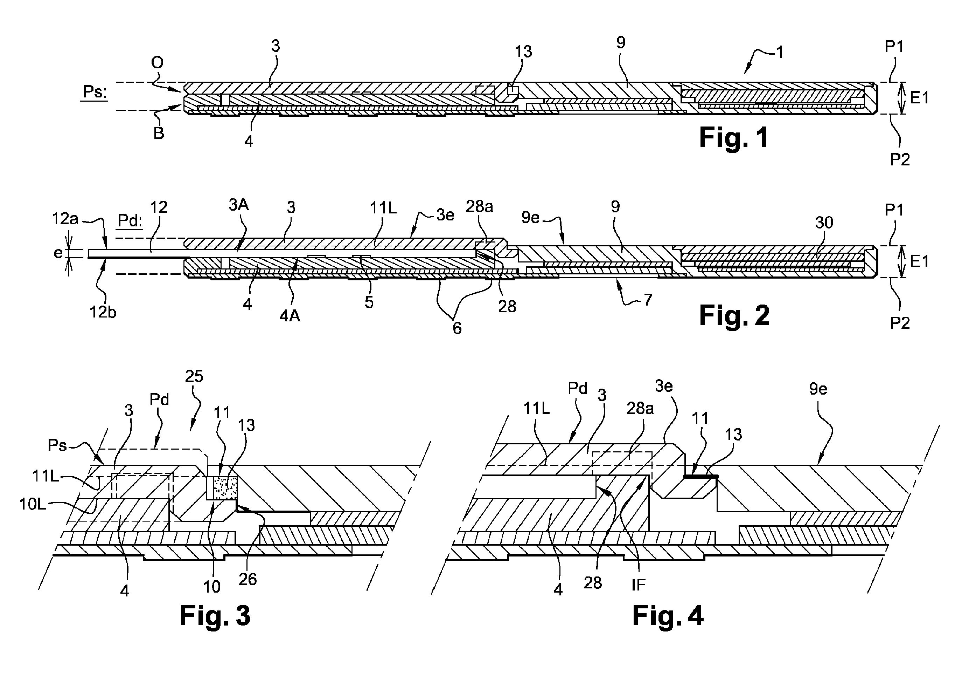

A la figure 1 , un dispositif de connexion à une carte à puce 1, conforme à un premier mode de réalisation de l'invention, comprend un boîtier 9 présentant sensiblement deux plans généraux opposés externes P1, P2 définissant entre eux un premier encombrement en épaisseur E1 ; La forme générale du dispositif dans l'exemple est globalement parallélépipédique. Le dispositif a ici une forme allongée et parfaitement plate sur les deux faces opposées correspondant aux plans P1 et P2. Dans cette configuration, le dispositif est très fin, esthétique et il peut donc être aisément rangé, par exemple dans un portefeuille. Dans l'exemple, l'épaisseur est de l'ordre de 3, 5 mm, voire moins.

Le boîtier 9 peut être, par exemple, un habillage ou enveloppe en plastique ou métallique du dispositif ou un support notamment obtenu brut de moulage ou en tôle de métal plié sur lequel sont fixés les autres composants directement ou indirectement.

Dans l'exemple, le dispositif comprend un bloc de connecteurs 5 pour jeu de plages de contact électrique de la carte notamment de type ISO 7816. Le dispositif comprend également un clavier 6 et un écran 7. Le bloc de connecteur est relié à un circuit imprimé ou porté sur lui. Le circuit comprend des composants électroniques aptes à effectuer la fonction de lecteur de carte ou d'adaptateur ou de convertisseur de signaux et/ou protocoles et/ou communication de données provenant ou allant vers la carte.

Le dispositif comprend de préférence des moyens de butée et ou centrage 28 de la carte en fin de logement de manière à la positionner par rapport au connecteur 5. La butée de mise en position fonctionnelle de carte 28 en fond de logement peut éventuellement former avec les connecteurs un seul bloc 4. Le bloc 4 peut porter tout ou partie des composants électroniques du lecteur; Toutefois, ces composants peuvent être déplacés en dehors de toute zone destinée à être en regard de la surface de la carte pour diminuer l'épaisseur.

La butée 28 se loge de préférence dans un orifice 28a correspondant de la plaque 3 lorsque celle-ci est en position serrée. Le dispositif comprend aussi une pile ou batterie 30.

Selon une caractéristique, le dispositif comprend un premier moyen d'appui 3 de carte 12 et un deuxième moyen d'appui 4 opposé; Ces moyens d'appuis sont destinés respectivement à appuyer contre les surfaces principales 12a, 12b de la carte ou la prendre en sandwich ; Dans l'exemple, les moyen d'appui sont des plaques arrière 3, et avant 4. La plaque 4 est fixe tandis que l'autre est mobile par rapport au boîtier.

La surface principale peut être limitée à des plages de connexion 5, dans le cas notamment où la prise en sandwich s'effectue entre au moins deux portions opposées de surface principale de la carte.

Les moyens d'appuis 3, 4 ont une première configuration serrée Ps entre eux; Les moyens d'appui sont serrés à plats et parallèles l'un de l'autre dans leur position serrée. Dans cette configuration de ce mode de réalisation, ils ne dépassent sensiblement pas lesdits plans P1, P2 du boîtier ni l'épaisseur d'un connecteur éventuel en bout. Ces plans délimitent une épaisseur minimale du boîtier hors tout considérant tous ses éléments. Il est au repos ou sous forme compactée.

Ces moyens d'appui en configuration rapprochée, ont leur surface en regard espacée d'une valeur inférieure à l'épaisseur de la carte destinée à être lue, en particulier dans la zone autour du connecteur ou d'une charnière de jonction au boîtier. Cela signifie qu'en étant rangé dans le portefeuille, sans la carte, l'épaisseur totale du dispositif peut être diminuée d'au moins une épaisseur de carte à lire par rapport à une configuration de lecture avec la carte.

Selon une caractéristique, au moins un des moyens d'appui 3, 4 est déplaçable jusqu'à une position dite déployée dans laquelle il est plus éloigné de l'autre moyen d'appui. Ainsi, on assure avec l'invention, un espace ou plus d'espace de réception de la carte entre lesdits moyens d'appuis. Dans l'exemple, c'est bien sûr la plaque arrière 3 qui est déplaçable relativement à la plaque 4 fixe. Toutefois, les deux pourraient être mobiles ensemble dans une autre variante de réalisation. L'épaisseur de l'espace ainsi dégagé correspond au moins à l'épaisseur d'une carte à puce, (environ 0, 8 mm).

Selon une autre caractéristique d'un premier mode de réalisation, le dispositif comprend des moyens de montage à déplacement perpendiculaire du moyen d'appui par rapport au boîtier 9 ou plan P1 correspondant; Ces moyens de montage permettent un déplacement complet et perpendiculaire du moyen d'appui;

Dans un mode de réalisation des moyens de montage ou de liaison, le premier moyen d'appui 3 qui est sous forme de plaque 3 comprend au moins une bordure latérale 25 qui comprend ou forme une liaison à débattement coulissant avec le boîtier.

La plaque comprend de préférence d'autres moyens de guidage 11 L et 10L par coulissement du même type ou non que le précédent disposés dans une zone latérale Z3 à proximité du bord B du dispositif.

Conformément à une caractéristique, la bordure 25 présente juste avant l'extrémité 26 de la plaque une inflexion ou déviation IF d'une amplitude égale au moins à l'épaisseur de la carte à puce à loger, notamment environ 0,8 mm et une surface d'extrémité 10 de la plaque ou rebord après l'inflexion IF formant une butée de fin de débattement de la plaque destinée à venir en butée contre un épaulement 11 ou équivalent du boîtier 9 en position écartée ou déployée.

De préférence, le dispositif comprend des moyens de rappel élastique 13 du moyen d'appui vers sa positon serrée Ps. Le cas échéant, l'amplitude de la déviation ci-dessus peut tenir compte éventuellement d'une épaisseur correspondant à des moyens élastiques de rappel en état comprimé s'ils sont placés entre la surface 10 et épaulement 11.

Conformément à une autre caractéristique, les moyens de rappel élastique du premier moyen vers la position serrée comprennent une matière compressible disposée entre la butée et l'épaulement telle qu'une lame ressort, un élastomère, une mousse élastique 13.

Dans les autres figures, d'autres modes de réalisation du dispositif, comprennent sensiblement les mêmes éléments du mode précédent, les numéros de référence identiques indiquant les mêmes éléments.

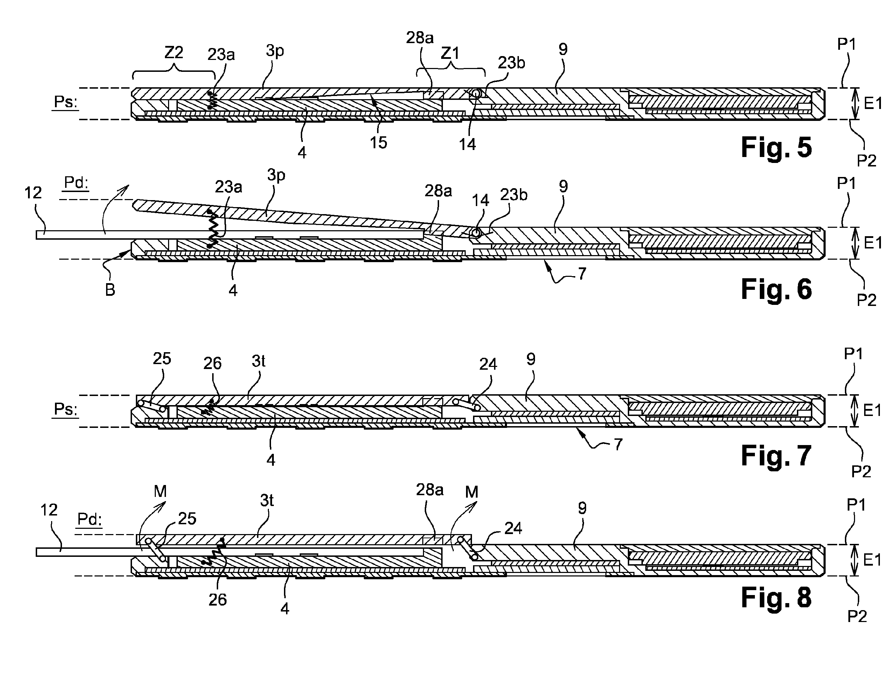

Dans le mode des figures 5, 6, les moyens de montage des moyens d'appui 3p par rapport au boîtier sont du type à déplacement pivotant par rapport au boîtier 9; ils permettent ainsi un déplacement complet pivotant des moyens d'appui 3p par rapport au boîtier 9.

Conformément à une caractéristique, le premier moyen d'appui comprend une plaque 3p dont une bordure latérale 27 (ici du côté opposé à une fente "o" d'introduction de la carte), comprend une liaison à pivotement 14 avec le boîtier et des moyens de rappel élastique 23a et/ou 23b du moyen d'appui vers la position serrée Ps. La plaque 3p se place au repos dans le prolongement du boîtier 9 et sous le plan P1.

Conformément à une caractéristique, la bordure de la plaque présente un axe de rotation 14 pour permettre une amplitude de rotation supérieure ou égale au moins à l'épaisseur de la carte; la plaque 3p comporte un évidement en biseau 15 dans l'épaisseur de la plaque qui s'étend d'une zone Z1 proche de l'axe de rotation 14 vers un bord externe B du boîtier ou bordure opposée de la plaque; la hauteur du biseau "h" est située à proximité de l'axe 14 et correspond sensiblement à l'épaisseur (e) de la carte.

Conformément à une autre caractéristique, les moyens de rappel élastique 23a du premier moyen d'appui comprennent un ressort à boudin ou équivalent disposé dans des zones latérales Z2 longitudinales de la plaque proche du bord externe B d'extrémité. Alternativement, un ressort 23b peut être placé autour de l'axe 14 de manière à s'opposer élastiquement à l'écartement des moyens d'appui.

Lorsque la carte est introduite dans le dispositif et se trouve dans sa position fonctionnelle, elle occupe au moins en partie le volume de biseau ménagé dans la plaque. Cela a pour effet de limiter l'amplitude de rotation du rabat et cela permet aussi un appui au niveau des contacts si le biseau s'en approche.

Le dispositif comprend des moyens de montage 24, 25 des moyens d'appui sur le boîtier procurant un déplacement combiné de rotation et de translation (M) du moyen d'appui 3t par rapport au boîtier 9.

Ici, ces moyens d'appui comprennent une charnière 24 assez large (environ 1 à 5 mm) disposée du côté situé au fond de la fente; qui peut être formée de deux charnières espacées des valeurs ci-dessus ou au moins de la carte à loger; la carte 12 est introduite à la figure 8.

A distance de ces charnières, vers la fente d'introduction, se trouvent optionnellement des moyens d'articulation latéraux 25 capables de suivre le mouvement M procuré par la double charnière 24. Ces moyens d'articulation 25 peuvent comprendre ou constituer des ressorts de rappel 26 tendant vers la position serrée de la figure 7. Autrement dit, l'articulation 25 n'est pas indispensable quand le ressort 26 est présent.

La carte introduite sous le rabat (fig. 8), le pousse et le met en position déployé après avoir suivi le mouvement de rotation et translation M. Le rabat peut ainsi s'accommoder de différentes épaisseurs de carte voire même loger deux cartes en ayant une double charnière en proportion.

La charnière 24 peut être réalisée en plastique par un ou plusieurs amincissement(s) transversaux, sur toute la largeur du dispositif, de la plaque 3t pour former une charnière plastique.

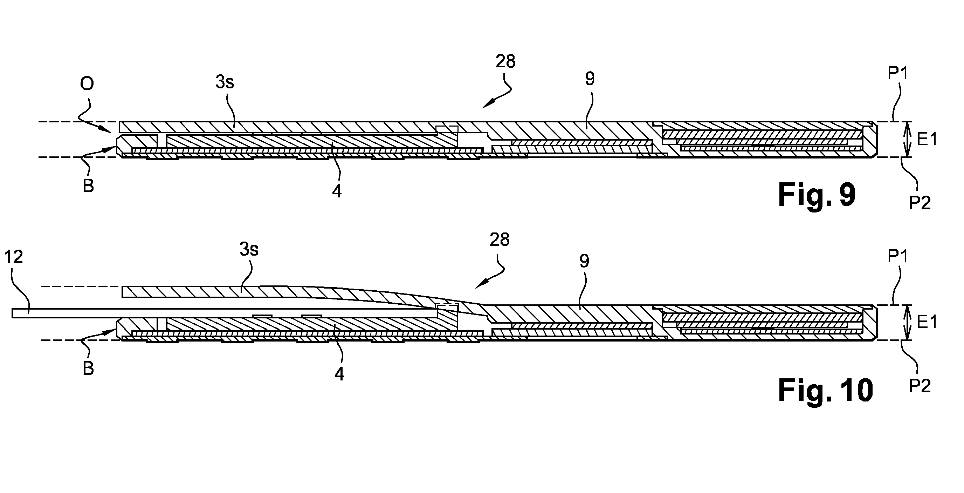

A la figure 9, selon un quatrième mode de réalisation, le rabat 3S est réalisé en une pièce continue ou solidaire du boîtier 9 (ou autre pièce fixée solidairement au boîtier); Le dispositif comprend des moyens de montage souple du rabat vis à vis du boîtier procurant une déformation du moyen d'appui par rapport au boîtier 9. Ici, le rabat est aminci à la jonction 28 avec le boitier. Au repos, figure 9, le rabat est plaqué contre le connecteur et le protège. Le dispositif adopte une position de moindre épaisseur. Dans cette position le rabat 3s est au repos (sans la carte) également dans le prolongement ou du moins ne dépasse pas le plan P1 du boîtier 9.

A la figure 10, la carte 12 est introduite dans le dispositif et le rabat fléchit et s'écarte de la plaque 4a grâce à son articulation souple 28.

Conformément à un mode (non représenté), le rabat forme en fait une poche avec le moyen d'appui opposé 4 dont l'ouverture O peut se trouver à l'opposé de la jonction 28 et les côtés de la poche correspondent aux bords latéraux ou longitudinaux du dispositif; La poche comprend de préférence un matériau sensiblement déformable élastiquement. Le matériau est notamment choisi parmi du cuir naturel ou synthétique, un élastomère, un plastique, un tissu ou bande élastique. La poche peut éventuellement comporter deux côtés fixés latéralement qu'ils soient parallèles ou perpendiculaire de manière à faciliter l'insertion de la carte.

Cette poche a l'avantage d'offrir une fente d'introduction de la carte comme les fentes de type porte-carte de portefeuille.

En utilisation, dans une variante préférée de l'invention, le lecteur de carte réalise avec la carte une fonction de générateur de numéro à usage unique OTP ("one time pass word" en terminologie anglaise). Par exemple, un utilisateur souhaite réaliser une transaction bancaire ou un achat sur internet dans lequel il doit utiliser un OTP qui servira par la suite à une authentification ou moyen de certification d'une transaction A cet effet, pour obtenir un OTP, il sort sa carte bancaire de son portefeuille et le glisse dans le dispositif; l'utilisateur tape un code PIN sur le clavier du lecteur qui est transmis à la carte; celle-ci, en retour, génère un OTP si le code est correct et le communique à l'utilisateur notamment en l'affichant sur un écran éventuel du lecteur ou de la carte.

Dans une variante, le dispositif est un appareil de communication tel un PDA assistant personnel, un téléphone; il intègre des moyens de communication et de traitement supplémentaires à ceux décrit le cas échéant.

Le lecteur peut servir aussi comme moyen d'interface homme machine avec la carte et peut comporter de préférence une source d'énergie et des moyens pour alimenter la carte.

Le cas échéant, le numéro OTP est transmis directement via une interface de communication du dispositif en relation avec un appareil distant ou terminal notamment.

Dans sa version la plus simple, le dispositif est un simple connecteur ou adaptateur pour connecter la carte à un appareil distant ou autre dispositif (appareil photo, clé USB, carte mémoire de masse, etc). Il ne comporte donc pas nécessairement d'écran ou de clavier.

Revenant à la figure 2, la surface 4a peut être celle du bloc de connecteurs 5 de carte à puce à l'intérieur du dispositif d'où s'étendent les plots 5 ou lames de contact de préférence élastiques. La surface d'appui peut être aussi la surface même des contacts notamment en matière élastique conductrice.

En variante de réalisation, la surface d'appui 4A est réalisée par les plots de connexion 5 mêmes. Les plots peuvent éventuellement être affleurant ou dépasser à peine la surface 4A d'une couche ou feuille ou paroi séparant la carte de l'extérieur et représentant le moyen d'appui 4.

Dans une autre variante, le dispositif prévoit la réception de cartes d'épaisseurs différentes, dans la mesure où les moyens d'appui sont extensibles perpendiculairement à la surface de la carte. Ainsi, ce lecteur peut s'adapter à différentes épaisseurs de carte 1, 2, 3 mm par exemple.

Le cas échéant, on peut disposer deux cartes ensemble ces cartes ayant des moyens de connexions entre elles et/ou vis à vis du dispositif. Par exemple, chaque moyen d'appui porte un connecteur en élastomère conducteur et les cartes sont placées dos à dos pour connecter respectivement leur connecteur respectif.

Le cas échéant, le rabat 3 ou moyen d'appui est réalisé par la carte à puce elle-même ou autre carte notamment fictive dont une des fonctions est simplement, par exemple, d'obturer le connecteur 5 du dispositif ou d'avoir une surface arrière lisse homogène. Des moyens d'accrochage ou de maintien en position fonctionnelle de la carte, sont prévus sur le dispositif.

Ainsi, par exemple, des glissières latérales (ou autres éléments équivalents) sont prévues sur les côtés longitudinaux ou latéraux du dispositif et forment ainsi d'autres moyens d'appui. Une bague élastique entourant la carte et le dispositif notamment au niveau des connecteurs peut être aussi prévue.

Ainsi, par exemple, le boîtier peut s'étendre jusqu'à la butée 28de carte et/ou des glissières ou rails latéraux permettent de maintenir la carte.

En utilisation, l'utilisateur peut retirer l'autre carte fictive ou non et la remplacer par la carte à lire.

Le cas échéant, le rabat, comprend une fonction de source d'énergie, ou de batterie principale ou annexe, éventuellement rechargeables. La batterie peut être réalisée en couches fines comme celles prévues pour les cartes à puce.

La batterie en position permet selon un exemple, de recharger une autre batterie interne juste pour effectuer une fonction de traitement, calcul ou génération d'OTP.

## Revendications

1. Dispositif de connexion à une carte (1) à puce, ledit dispositif comprenant, un premier moyen d'appui (3) de carte (12) et un deuxième moyen d'appui 4 opposé destinés respectivement à appuyer contre les surfaces principales (12a, 12b) de la carte quand elle est en position fonctionnelle de connexion, lesdits moyens d'appui ayant une première position serrée Ps et une position déployée Pd,
**caractérisé en ce que** les moyens d'appui sont serrés à plats et parallèles l'un de l'autre dans leur position serrée.

2. Dispositif selon la revendication 1, **caractérisé en ce qu'**il comprend des moyens de montage à déplacement perpendiculaire du premier moyen d'appui par rapport au boîtier (9) et des moyens de rappel élastique (13) du moyen d'appui vers la positon serrée Ps.

3. Dispositif selon la revendication précédente, **caractérisé en ce que** le premier moyen d'appui (3) comprend une plaque dont au moins bordure latérale (25) comprend une liaison à débattement coulissant avec le boîtier.

4. Dispositif selon la revendication précédente, **caractérisé en ce que** la bordure (25) présente avant l'extrémité (26) de la plaque (3) une inflexion IF d'une amplitude égale au moins à l'épaisseur de la carte et une surface d'extrémité (10) de la plaque après l'inflexion IF destinée à venir en butée contre un épaulement (11) du boîtier (9), en position écartée.

5. Dispositif selon l'une quelconque des revendications 2 à 4, **caractérisé en ce** les moyens de rappel élastique du premier moyen vers ladite position serrée comprennent une matière compressible (13) disposée entre la surface d'extrémité de plaque (10) et l'épaulement (11) telle qu'une lame ressort, un élastomère.

6. Dispositif selon la revendication 1, **caractérisé en ce qu'**il comprend des moyens de montage (14) à déplacement pivotant du premier moyen d'appui par rapport au boîtier (9) permettant un déplacement complet pivotant du premier moyen d'appui (3p) par rapport au boîtier (9).

7. Dispositif selon la revendication 6, **caractérisé en ce que** le premier moyen d'appui comprend une plaque (3p) dont une bordure latérale (25) comprend une liaison à pivotement (14) avec le boîtier et des moyens de rappel élastique (23a, 23b) du moyen d'appui vers la positon serrée Ps.

8. Dispositif selon la revendication précédente, **caractérisé en ce que** la bordure présente un axe de rotation (14) pour permettre une amplitude de rotation supérieure ou égale au moins à l'épaisseur de la carte, la plaque (3p) comportant un évidement en biseau (15) dans l'épaisseur de la plaque, s'étendant d' une zone Z proche de l'axe de rotation (14) vers une direction opposée, la hauteur du biseau (h) étant proche de l'axe (14) et correspondant sensiblement à l'épaisseur (e) de la carte.

9. Dispositif selon la revendication 1, **caractérisé en ce qu'**il comprend des moyens de montage procurant un déplacement (M) combiné de rotation et de translation du moyen d'appui par rapport au boîtier 9.

10. Dispositif selon la revendication 1, **caractérisé en ce qu'**il comprend des moyens de montage souple (28) procurant une déformation du moyen d'appui par rapport au boîtier.

11. Dispositif selon la revendication 1, **caractérisé en ce que** les moyens d'appui (3, 4) forment une poche comprenant un matériau sensiblement déformable élastiquement.

12. Dispositif selon la revendication précédente, **caractérisé en ce que** ledit matériau est choisi parmi du cuir, un élastomère, un plastique, un tissu élastique.
